Europäisches Patentamt

European Patent Office

Office européen des brevets

(19)

(11) Publication number:  0 048 145
A1

# (12) EUROPEAN PATENT APPLICATION

(21) Application number: 81304176.1

(22) Date of filing: 11.09.81

(51) Int. Cl.³: **C 08 J 9/16**
C 08 L 25/02
//C08F212/12

(30) Priority: 13.09.80 JP 127624/80

(43) Date of publication of application:
24.03.82 Bulletin 82/12

(84) Designated Contracting States:
BE DE FR GB

(71) Applicant: Kanegafuchi Kagaku Kogyo Kabushiki Kaisha
2-4, 3-chome, Nakanoshima Kita-ku
Osaka-shi Osaka-fu(JP)

(72) Inventor: Nakagawa, Masao
442-21 Sone-cho Takasago city
Hyogo-prefecture(JP)

(72) Inventor: Nishida, Tatehiko
4-13-610, Shimohozumi Ibaraki-city
Osaka-prefecture(JP)

(74) Representative: Pennant, Pyers et al,
Stevens, Hewlett & Perkins 5 Quality Court Chancery Lane
London, WC2A 1HZ(GB)

(54) Heat resistant expandable plastic particles and moulded products made therefrom.

(57) Heat resistant expandable plastic particles made from a polymer and a volatile blowing agent in which the polymer comprises 15 to 55% by weight α-alkylstyrene units and 85 to 45% by weight units of other polymerizable monomer. The polymer can be made by emulsion polymerization and the pelleted and impregnated with blowing agent. Foamed mould products are made by thermal prefoaming at a gauge pressure of more than 0.1 kg/cm² (9.8kPa) and subsequent thermal moulding. The products have superior heat resistance as compared with conventional foamed moulded polystyrene foams.

EP 0 048 145 A1

Heat resistant expandable plastic particles, method of
making them, foamed moulded heat resistant plastic products
and method of making them.

Expandable polystyrene in particulate form and moulded
products made by expansion thereof are known.  The particles
are typically produced by making styrene monomer into a
granular polymerizate by suspension polymerization followed
by impregnating the granules with a volatile blowing agent.

For the production of a foamed moulded product it is
usual to prefoam the expandable styrene particles by heating
with steam followed by heat-moulding with steam in a mould
which can be closed but is not gas tight.  However, because
the monomer constituting the polymer is styrene, such
foamed products have the defect that they cannot be used as
the heat insulation material for pipes used at relatively
high temperatures or in other applications where heat
resistance is required.

The present invention is based on the discovery that by
using certain α-alkylstyrenes as components of the polymer
expandable plastics in particulate form and moulded products
made by expansion thereof having superior heat resistance
can be obtained.

Accordingly, the present invention provides a heat
resistant plastic in the form of expandable particles
comprising a polymer and a volatile blowing agent characterized
in that the polymer comprises from 15 to 55% by weight units
of at least one $\alpha\text{-}(C^1$ to $C_3$ alkyl)styrene and from 85 to 45%
by weight units of at least one other polymerizable monomer
and the blowing agent comprises from 3 to 95% by weight of
the plastic.

The invention includes a method of making such a heat resistant plastic in the form of expandable particles wherein the polymer is synthesized from the monomers by emulsion polymerization, recovered from the emulsion and pelletized by hot extrusion and in that the blowing agent is incorporated in the plastic during or after pelletization.

The invention further includes a heat resistant plastic in the form of an expanded, moulded product comprising a blown foam of a polymer characterized in that the polymer comprises from 15 to 55% by weight units of at least one $\alpha\text{-}(C_1$ to $C_3$ alkyl)styrene and from 85 to 45% by weight units of at least one other polymerizable monomer; and a method of making such a moulded product wherein a plastic in particle form of the invention is prefoamed at an elevated temperature and subsequently moulded at an elevated temperature.

The polymer used in this invention comprises 15 to 55% more preferably 20 to 40% by weight $\alpha$-alkylstyrene units and from 85 to 45, more preferably 80 to 60% by weight of the other polymerizable monomer.

If the amount of $\alpha$-alkylstyrene is less than 15% by weight, a practically useful improvement of heat resistance cannot be attained, and if the amount of $\alpha$-alkylstyrene is more than 55 weight %, the heat resistance of the plastics is so greatly elevated that foaming and moulding become difficult. Because a desirable degree of heat resistance can in practice be obtained with $\alpha$-alkylstyrene proportions of less than 55% by weight, the use of more than 55% by weight of $\alpha$-alkylstyrene is not necessary.

The $\alpha$-alkylstyrene can be, $\alpha$-methyl-, $\alpha$-ethyl-, $\alpha$-n-propyl-, and $\alpha$-iso-propyl-styrenes or a mixture thereof.

As the other polymerizable monomer, styrene alone, or a mixture of styrene other polymerizable monomers such as acrylonitrile, methyl-methacrylate, n-butylacrylate, ethylacrylate, 2-ethylhexylacrylate or mixtures thereof can be used.

For the synthesis of the polymer from these monomers, emulsion polymerization can be employed.

Emulsion polymerization may be performed according to the ordinary method. For example the mixture of the monomers described above is treated in an aqueous medium in a batch process or continuously in the presence of a free-radical polymerization catalyst.

In this case, the order of addition of the monomers is not particularly restricted. The α-alkylstyrene and the other polymerizable monomer may be added at one time or continuously. Alternatively the α-alkylstyrene may be added initially on its own followed by continuous addition of the other polymerizable monomer. As the free-radical polymerization catalyst, peroxides, such as potassium persulfate, ammonium persulfate, and cumene hydroperoxide, can be used. Polymerization accelerators, chain transfer agents, emulsifiers etc. may be appropriately selected from those which are generally known for use in emulsion polymerization. The polymer latex obtained can be coagulated by salting out as in the normal method for similar materials and dried to give a powdery polymer.

The powdery polymer can be pelletized in a conventional extruder to give polymer pellets suitable for impregnation with a blowing agent to give expandable particles.

The pellets can be impregnated with the blowing agent as follows:

water, dispersing agent, and the polymer pellets are charged to an autoclave followed by the addition of a desired amount of blowing agent, the temperature is raised, maintained for a suitable time, and then the autoclave is cooled and the product recovered.

The dispersing agent used here can be well-known dispersing agents such as polyvinyl alcohol, polyvinyl pyrrolidone, basic calcium phosphate, etc. When basic calcium phosphate is used as the dispersing agent, it will be used in conjunction with an anionic surface active agent such as the sodium salt of alkyl benzene sulfonic acid or the sodium salt of an α-olefin sulfonic acid, etc.

The blowing agent used can be n-butane, iso-butane, n-pentane, iso-pentane, or petroleum ether, which are used either alone or in admixture.

The expandable particles may include an additive to improve their capacity to expand. The additive may be a solvent, such as toluene, ethylbenzene, xylene, styrene, α-methylstyrene etc.; a swelling agent such as cyclohexane, hexane, heptane, octane etc.;or a plasticizer such as diemethyl phthalate, diethyl phthalate, dibutyl phthalate, dioctyl phthalate, butylbenzyl phthalate, dioctyladipate, etc. These solvents, swelling agents, and plasticizers may be used alone or in combination to suit the intended use or desired properties of the product.

The degree of polymerization of the polymer in the expandable particles will usually be maintained within a restricted range. Thus, the specific viscosity, $\eta sp$, (determined by viscometry with an Ostwald's viscometer, at a polymer concentration of 1% in toluene, at $30 \pm 0.1^{\circ}C$) will usually be in the range of 0.6 to 1.7, or more preferably in the range of 0.8 to 1.4.

When the specific viscosity is less than 0.6 or more than 1.7, the properties of the foamed polymer and of the foamed moulded product are relatively poor. Further, especially when the specific viscosity is less than 0.6, it is difficult to obtain satisfactory pellets by conventional extrusion-pelletization.

Prefoaming of conventional expandable polystyrene particles containing a volatile blowing agent can be carried out with steam or a mixture of steam and air at 0 kg/cm$^2$ gauge (0 Pa gauge) (about 100$^o$C).

In this invention prefoaming is usually carried out at a pressure greater than 0.1 kg/cm$^2$ gauge (9.8 k Pa gauge) about (102$^o$C). If the pressure is less than 0.1 kg/cm$^2$ gauge it is difficult to obtain a product having a hig expansion rate.

Moulded products can be made by moulding at suitably elevated temperatures typically using steam or a mixture of steam with air as the heating medium. Generally the maximum pressure inside the mould during moulding is more than 1.0 kg/cm$^2$ gauge (98 k Pa gauge). It is difficult to obtain a satisfactory moulded product if the pressure is less than 1.0 kg/cm$^2$ gauge.

The following Examples illustrate the invention. All parts and percentages are by weight.

Example 1.

To a reactor equipped with a stirrer, reflux condenser, nitrogen-feed pipe, thermometer, and metering pump, 250 parts of water, 30 parts of sodium palmitate, 0.0025 parts of ferric sulfate hydrate, 0.01 parts of ethylenediamine tetramide, and 0.4 parts of sodium formaldehyde sulfoxylate were charged, oxygen was flushed from the reactor by passing nitrogen through the reactor and the reactor and contents were heated to 60$^o$C whilst maintaining the flow of nitrogen. Then 100 part of monomer mixture of a composition set out in Table 1 in which were dissolved 0.3 parts of cumene hydroperoxide as an initiator (catalyst) and 0.1 parts of tertiary dodecyl mercaptan as a chain transfer agent was continuously added over a period of 6 hours. After completion of the addition, the mixture was stirred for a further 1 hour at 60°C. The copolymer latex thus formed was coagulated with $CaCl_2$, heated to flocculate the particles separated from the aqueous reaction medium, washed and dried.

After drying, the polymer was pelletized in a 40 mm vent-type extruder the yielded pellets having an average diameter of 1mm and an average length of 3mm.

112 parts of these pellets, 100 parts of water, 0.5 parts of calcium phosphate 0.006 parts of sodium α-olefin sulfonate were charged to a stirred autoclave. The autoclave was flushed with nitrogen and the contents heated to 90°C at which temperatures 9.0 parts of butane were added as blowing agent. The mixture was then immediately heated to 110°C, kept at 110°C for 6 hours and subsequently cooled to 40°C, and the pellets were separated from the aqueous medium dried and sieved, to give expandable plastics A-D (Table 1).

The expandable plastics A-D thus obtained were foamed at the steam pressure (to be called foaming pressure hereafter) of 0 kg/cm$^2$, 0.1 kg/cm$^2$, 0.2 kg/cm$^2$ (19.6 k Pa), 0.5 kg/cm$^2$ (49 k Pa) guage and the expansion rate was measured. The results are shown in Table 2.

The expansion rate was determined as follows: A fixed volume of the particles was placed in a measuring cylinder and the weight is measured. Then the expansion rate is expressed in the apparent volume in cm$^3$ measured by the measuring cylinder per 10g of the plastics.

Table 1

| plastics | α-methyl styrene wt % | styrene wt % |
|----------|----------------------|--------------|
| A | 5 | 95 |
| B | 20 | 80 |
| C | 30 | 70 |
| D | 60 | 40 |

| | | | expansion rate ($cm^3$/10g plastics) | | | | | | | | | | |
|---|---|---|---|---|---|---|---|---|---|---|---|---|---|
| foaming pressure ($kg/cm^2$ gauge) | | | 0 | | | 0.1 | | | 0.2 | | | 0.3 | | |
| foaming time (minutes) | | | 1 | 2 | 3 | 1 | 2 | 3 | 1 | 2 | 3 | 1 | 2 | 3 |
| plastics | | A | - | 650 | 200 | 600 | 800 | - | 800 | - | - | - | - | - |
| | | B | - | 520 | 650 | 600 | 780 | - | - | 900 | - | 900 | - | - |
| | | C | - | 260 | 300 | - | 350 | 420 | - | 430 | 600 | 600 | 800 | - |
| | | D | - | 120 | 150 | - | 230 | 250 | - | 320 | 350 | 320 | 380 | 380 |

As shown in Table 2 as the content of α-methylstyrene increases the expansion rate falls very considerably. When the polymer comprises 60 parts of α-methylstyrene, as in plastic D, a high expansion rate is not obtained.

It was found that when foaming pressure is 0 $kg/cm^2$ gauge the expansion rate is relatively low and optimum expansion rates are obtained when the steam pressure is more than 0.1 $kg/cm^2$ gauge.

When α-ethylstyrene, α-n-propylstyrene, or α-isopropylstyrene were used instead of α-methylstyrene, similar results were obtained.

As described above, a good heat resistant expandable plastic particle and its foamed plastic molded form is obtained at foaming pressure higher than those customarily used when the polymer is polystyrene.

Example 2.

The proceedure of Example 1 was followed except that 30 part of α-methylstyrene, 70 part of styrene and the amount of tertiary dodecyl mercaptan shown in Table 3 were used to obtain expandable plastics E to H as particles. Their expansion rates were determined as in Example 1 and the results are set out in Table 4.

The specific viscosity of the expandable plastic particles measured with an Ostwald's viscometer at a polymer concentration of 1% in toluene at $30 \pm 0.1°C$ is also given in Table 4.

When α-ethylstyrene, α-n-propylstyrene, or α-isopropylstyrene were used instead of α-methylstyrene, similar results were obtained.

Table 3.

| plastics | chain transfer agent: tertiary dodecylmercaptan (parts) |
|----------|--------------------------------------------------------|
| E | 0 |
| F | 0.05 |
| G | 0.075 |
| H | 0.50 |

Table 4.

| plastics | foaming pressure (kg/cm² gauge) → foaming time (minutes) | expansion rate (cm³/10g of plastics) | | | | | | | | | | | | η sp |
|---|---|---|---|---|---|---|---|---|---|---|---|---|---|---|
| | | 0 | | | 0.1 | | | 0.2 | | | 0.5 | | | |
| | | 1 | 2 | 3 | 1 | 2 | 3 | 1 | 2 | 3 | 1 | 2 | 3 | |
| | E | - | 200 | 240 | - | 220 | 300 | - | 240 | 320 | 400 | 500 | - | 1,824 |
| | F | - | 240 | 300 | - | 330 | 400 | - | 400 | 570 | 570 | 700 | - | 1,423 |
| | G | - | 240 | 300 | - | 320 | 390 | - | 400 | 580 | 520 | 720 | - | 1,236 |
| | H | - | 300 | 350 | - | 360 | - | - | 440 | - | 480 | sh* | - | 0.558 |

* sh = product shrinkage.

Example 3.

The procedure of Example 1 was followed except that 30 part of α-methylstyrene and 70 part of styrene were used emulsion polymerization was carried out, and to portions of the latex after completion of the emulsion polymerization, respectively 0.5 parts, 1.0 parts, 2.0 parts, or 3.0 parts of butylbenzylphthalate was added.

Then the mixture was further treated as described in Example 1, to give expandable polymer particles I-L. The expansion rate of these plastics was measured as described in Example 1. The results are shown in Table 5.

When α-ethylstyrene, or α-n-propylstyrene, or α-isopropylstyrene was used instead of α-methylstyrene similar results were obtained.

<p align="center">Table 5.</p>

| plastics | foaming pressure $(kg/cm^2$ gauge) | expansion rate $(cm^3/10$ g of plastics) | | | | | | | | | | | |
| --- | --- | --- | --- | --- | --- | --- | --- | --- | --- | --- | --- | --- | --- |
| | | 0 | | | 0.1 | | | 0.2 | | | 0.3 | | |
| | foaming time (minutes) / amount of butylbenzyl-phthlate added (parts by wt.) | 1 | 2 | 3 | 1 | 2 | 3 | 1 | 2 | 3 | 1 | 2 | 3 |
| I | 0.5 | - | 300 | 340 | - | 400 | - | - | 500 | - | 700 | - | - |
| J | 1.0 | - | 380 | 400 | - | 510 | - | - | 650 | - | 850 | *sh | - |
| K | 2.0 | - | 450 | 500 | - | 680 | - | - | 800 | - | - | - | - |
| L | 3.0 | - | 510 | 650 | 520 | 780 | - | - | 900 | - | - | - | - |

Example 4.

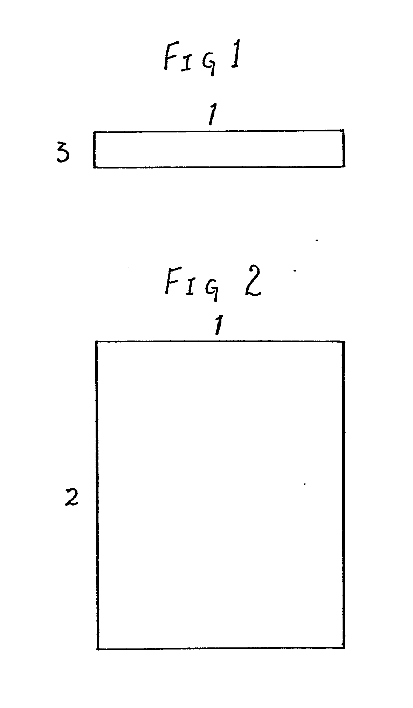

Samples of plastics A-L obtained in Example 1-3 were each prefoamed until the apparent expansion rate was 40 times, kept for 24 hours, and moulded with a Pearl Star 90 moulding machine (Toyo Machinery & Metal Co., Ltd.) in a metallic mould, the internal configuration of which is illustrated in Figures 1 and 2. Figure 1 is a diagrammatic cross section and Figure 2 is a diagrammatic plan of the internal dimensions of the mould. The internal width of the mould (1) was 200 mm, the internal length (2) 300 mm and the internal depth (3) 20 mm.

The moulding conditions were: mould heating time 5 sec.; loading time 10 sec.; mould preheating time 7 sec.; two face heating time 20 sec., supplementary heating time 7.5 sec.; one face heating pressure 0.5 $kg/cm^2$ (49 k Pa); water-cooling time 60 sec.; and cooling time 180 sec. The two face heating pressure (the gauge pressure of the heated steam supplied from both faces of the metallic mould was varied as follows 0.7 $kg/cm^2$ (69 k Pa) 0.8 $kg/cm^2$ (78 k Pa), 1.0 $kg/cm^2$ (98 k Pa), 1.2 $kg/cm^2$ (118 k Pa) and 1.4 $kg/cm^2$ (137 k Pa).

The moulded products obtained were evaluated for their surface state and inner bonding.

Here inner bonding means the degree of adhesion of particles when the moulded product is broken. It is expressed as the ratio of the number of fractured particles at the broken surface to the total number of particles at the surface.

That is, when a sample of a moulded product is broken, the inner bonding rate is defined as 0% if the fracture occurs only in the space between particles, and the rate is defined as 100% if the fracture occurs only inside the particles.

The surface state is evaluated as follows:

(1) Is the space between particles on the surface of the product filled up by molding?

(2) What is the degree of fusion of the plastics on the surface of the product?

The more the space between particles of the product is filled up and the lower is the degree of fusion of the plastics on the product surface, the better is the surface state. In the following the result is shown in Table 6.

Table 6.

| moulding pressure (kg/cm²/gauge) | | 0.7 | | 0.8 | | 1.0 | | 1.2 | | 1.4 | |
|---|---|---|---|---|---|---|---|---|---|---|---|
| | | Surface State | Inner Bonding (%) | Surface State | Inner Bonding (%) | Surface State | Inner Bonding (%) | Surface State | Inner Bonding (%) | Surface State | Inner Bonding (%) |
| plastics | A | ○ | 90 | ○ | 90< | ○ | 90< | ○,m | 90< | - | - |
| | B | x | 20 | △-○ | 50 | ○ | 90< | ○ | 90< | ○ | 90< |
| | C | x | ○ | x | ○ | △-x | 10 | ○ | 80 | ○ | 90< |
| | D | x | ○ | x | ○ | x | ○ | △-x | 10 | △-x | 20 |
| | E | x | ○ | x | ○ | x | ○ | △-x | 10 | △-x | 30 |
| | F | x | ○ | x | ○ | x-△ | 20 | △-○ | 50 | ○ | 90 |
| | G | x | ○ | x | ○ | △-x | 30 | ○ | 80 | ○ | 90< |
| | H | x sh | 90< | x sh | 90< | x sh | 90< | x sh | 90< | x sh | 90< |
| | I | x | ○ | x-△ | 10 | ○-△ | 70 | ○ | 90< | ○-△ | 90< |
| | J | x | 10 | x-△ | 30 | ○-△ | 70 | ○ | 90< | ○-△ | 90< |
| | K | △ | 50 | ○ | 90< | ○ | 90< | ○ | 90< | ○-△ | 90< |
| | L | ○ | 80 | ○ | 90< | ○ | 90< | ○ | 90< | △m | 90< |

sh = product shrinkage.
m = slight surface melting of product.

○ = good

△ = fair
x = poor

Example 5.

Heat resistance tests were performed on the products which had good surface state and inner bonding rate from products A to L obtained in Example 4.

The heat resistance test was performed with a uniform heating dryer manufactured by Tabai Co., Ltd.; the mould product was continuously heated at $90^{\circ}C$ or at $100^{\circ}C$ for 168 hours, and then the change (%) in the maximal size (length) of the product was determined.

The results are shown in Table 7.

Table 7.

| product | heat resistance test at | |
|---|---|---|
| | $90^{\circ}C$ (%) | $100^{\circ}C$ (%) |
| A | + 4.2 | -12 |
| B | - 0.2 | -3.2 |
| C | 0 | -0.9 |
| F | 0 | -1.0 |
| G | 0 | -1.1 |
| I | 0 | -1.2 |
| J | - 0.1 | -2.1 |
| K | - 0.3 | -3.5 |
| L | - 0.9 | -5.0 |

These results show that good heat-resistant expandable particles and moulded products obtained from can be obtained by this invention.

0048145

## CLAIMS

1. A heat resistant plastic in the form of expendable particles comprising a polymer and a volatile blowing agent characterized in that the polymer comprises from 15 to 55% by weight units of at least one $\alpha$-($C_1$ to $C_3$ alkyl)styrene and from 85 to 45% by weight units of at least one other polymerizable monomer and the blowing agent comprises from 3 to 95% by weight of the plastic.

2. A plastic as claimed in claim 1 characterized in that the polymer comprises 20 to 40% by weight $\alpha$-alkylstyrene units and 80 to 60% by weight of units of the other monomer(s).

3. A plastic as claimed in either claim 1 or claim 2 characterized in that the other polymer is styrene.

4. A plastic as claimed in any one of claims 1 to 3 characterized in that the blowing agent is n-butane, iso-butane, n-pentane, iso-pentane, petroleum ether or a mixture thereof.

5. A plastic as claimed in any one of claims 1 to 4 characterized in that the specific viscosity of the polymer containing the blowing agent is from 0.6 to 1.7 at a polymer concentration of 1% by weight in toluene at $30 \pm 0.1^{\circ}C$.

6. A plastic as claimed in claim 5 characterized in that the specific viscosity of the polymer is from 0.8 to 1.4.

7. A plastic as claimed in any one of claims 1 to 6 characterized in that it additionally contains from 0.5 to 5% by weight on the polymer of at least one solvent and/or swelling agent and/or plasticizer.

8. A plastic as claimed in claim 7 characterized in that the solvent is one or more of toluene, ethylbenzene, xylene, styrene and $\alpha$-methylstyrene; and/or the swelling agent is one or more of cyclohexane, hexane, heptane and octane; and/or the plasticizer is one or more of
dimethylphthalate, diethylphthalate, dibutylphthalate
dioctylphthalate, butylbenzylphthalate and dioctyladipate.

9.     A method of making a heat resistant plastic in the
form of expandable particles as claimed in any one of claims
1 to 8 characterized in that the polymer is synthesized from
the monomers by emulsion polymerization, recovered from
the emulsion and pelletized by hot extrusion and in that
the blowing agent is incorporated in the plastic during
or after pelletization.

10.     A method as claimed in claim 9 characterized in that
the emulsion polymerization is carried out by continuous
addition of the α-alkylstyrene monomer, having dissolved
therein at least one polymerization catalyst and, optionally,
at least one chain transfer agent, and the other polymerizable
monomer, into an aqueous reaction medium containing an
emulsifying agent and promoter.

11.     A method as claimed in claim 9 characterized in that
the emulsion polymerization is carried out by a single
addition of the α-alkylstyrene, having dissolved therein at
least one polymerization catalyst and, optionally, at least
one chain transfer agent,and of the other monomer, into an
aqueous reaction medium containing emulsifying agent and
promoter.

12.     A method as claimed in claim 9 characterized in that
the emulsion polymerization is carried out by continuous
addition of the other monomer, having dissolved therein at
least one polymerization catalyst and, optionally, at least
one chain transfer agent, into an aqueous reaction medium
containing emulsifying agent, promoter and the α-alkylstyrene.

13.     A heat resistant plastic in the form of an expanded,
moulded product comprising a blown foam of a polymer characterized in that the polymer comprises from 15 to 55% by weight units of at least one $\alpha$-($C_1$ to $C_3$ alkyl)styrene and from 85 to 45% by weight units of at least one other polymerizable monomer.

14.    A method of making a moulded product as claimed in claim 13 characterized in that a plastic in particle form as claimed in any one of claims 1 to 8 is prefoamed at an elevated temperature and subsequently moulded at an elevated temperature.

15.    A method as claimed in claim 14 characterized in that the plastic is prefoamed at a pressure of more than 0.1 $kg/cm^2$ (9.8 k Pa) gauge using steam or a mixture of air and steam as the heating medium.

16.    A method as claimed in either claim 14 or claim 15 characterized in that the prefoamed plastic is moulded in a closed but not sealed mould, using steam or a mixture of steam and air as the heating medium to acheive a maximum pressure inside the mould during heating of more than 1 $kg/cm^2$ (98 k Pa) gauge.

FIG 1

1

3

FIG 2

1

2

# EUROPEAN SEARCH REPORT

**European Patent Office**

## DOCUMENTS CONSIDERED TO BE RELEVANT

| Category | Citation of document with indication, where appropriate, of relevant passages | Relevant to claim |
|---|---|---|
| X | GB - A - 1 062 011 (SOCIETE EDISON) <br><br> * claims 1-5,8; example 3 * <br><br> -- | 1-3, 13-16 |
| X | GB - A - 754 513 (B.A.S.F.) <br><br> * claim 1; example 5 * <br><br> -- | 1-4, 13-16 |
| X | US - A - 3 657 162 (A.B. FINE STONE et al.) <br><br> * claims 6,8,12; example 4 * <br><br> -- | 1-4, 13-16 |
|  | DE - A - 1 569 382 (SEKISUI KAGAKU KOGYO) <br><br> * claims 1-8 * <br><br> -- | 7,8 |
|  | GB - A - 1 063 333 (PECHINEY SAINT GOBAIN) <br><br> * claims 1-3 * <br><br> -- | 1 |
| A | GB - A - 667 288 (MONSANTO CHEMI-CAL) <br><br> * claims; page 1, lignes 11-38 * <br><br> ------------ | 9 |

**CLASSIFICATION OF THE APPLICATION (Int. Cl.³)**

C 08 J 9/16
C 08 L 25/02
/C 08 F 212/12

**TECHNICAL FIELDS SEARCHED (Int. Cl.³)**

C 08 J 9/16
9/18
9/20
9/14
C 08 F 212/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-12-1981 | HALLEMEESCH |

EPO Form 1503.1 06.78